# EUROPÄISCHE PATENTSCHRIFT

(11) **EP 2 394 934 B1**
(45) Veröffentlichungstag und Bekanntmachung des Hinweises auf die Patenterteilung: **09.05.2012**
(21) Anmeldenummer: 10006008.6
(22) Anmeldetag: 10.06.2010
(51) Int. Cl.: B65G 17/08, B65G 23/06

(54) **Transportvorrichtung**
Transport device
Dispositif de transport

(43) Veröffentlichungstag der Anmeldung: 14.12.2011
(73) Patentinhaber: FORBO SIEGLING GMBH, 30179 Hannover (DE)
(72) Erfinder: Buch, Torsten, 30900 Wedemark (DE); Alpers, Patrick, 30890 Barsinghausen (DE); Badenhop, Christian, 30163 Hannover (DE); Bergmann, Werner, 30161 Hannover (DE); Schröter, Rico, 30167 Hannover (DE)
(74) Vertreter: Scheffler, Jörg

(56) Entgegenhaltungen:
- EP-A1- 1 050 492
- WO-A1-96/15054
- GB-A- 2 419 172
- US-A- 3 672 488
- US-A- 4 925 016

## Beschreibung

Transportvorrichtung bestehend aus einem Kettenrad umfassend mehrere Antriebs- und Führungselemente und weiterhin bestehend aus einem aus einzelnen, relativ zueinander beweglichen Modulen bestehenden Transportband mit einem plattenartigen Modulkörper, dessen eine Seite die Auflagefläche für das zu fördernde Gut bildet und an dessen Endabschnitten beabstandete Ösen ausgebildet sind, wobei jeweils die Ösen eines Moduls in Zwischenräume der Ösen eines benachbarten Moduls eingreifen und die Ösen zweier benachbarter Module mittels eines in einer Durchbrechung der Ösen angeordneten Gelenkstabs verbunden sind.

Solche Transportvorrichtungen, auch Modulbänder genannt, werden zum Transport von Gütern eingesetzt. Die Übertragung der Antriebs- beziehungsweise Vortriebskraft von der Antriebswelle auf das Transportband wird durch Antriebselemente realisiert, die einen Formschluss zwischen einem Kettenrad und einem Modul des Transportbands herstellen. Die Antriebselemente sind über den Umfang des Kettenrads gleichmäßig verteilt. Zwei benachbarte Antriebselemente bilden jeweils eine Lücke. Die Antriebselemente können beispielsweise als Antriebszähne oder Antriebsnuten ausgebildet sein. Neben der Übertragung der Vortriebskraft wird das Kettenrad auch zur Bandsteuerung genutzt. Die Bandsteuerung ist die seitliche Führung des Bandes.

Eine Transportvorrichtung der genannten Art ist aus der Druckschrift DE 77 08 369 U1 bekannt Diese zeigt eine Transportvorrichtung mit einem aus einzelnen, relativ zueinander beweglichen Modulen bestehenden Transportband, bei der das Transportband über ein Kettenrad läuft, welches Antriebselemente aufweist, die durch ihren Eingriff in die Module des Transportbands zugleich als eine Bandsteuerung wirken. Dabei werden die Antriebselemente zwischen den Endabschnitten zweier benachbarter Wangen eines Moduls positioniert.

Durch die Bandsteuerung, auch Querführung genannt, wird verhindert, dass das Transportband sich quer zu seiner Umlaufbewegung bewegt. Solch eine Querbewegung wird durch Querkräfte verursacht, die beispielsweise durch eine ungleiche Beladung des Transportbands verursacht sein können. Die Führungselemente nehmen diese Querkräfte auf und verhindern somit eine Querverschiebung des Transportbands.

Weitere Transportvorrichtungen mit einer solchen Bandsteuerung sind aus der Druckschrift EP 0 113 909 B1, der Druckschrift WO 96/15054 A1. der Druckschrift US 4,925,016 A, der Druckschrift US 3,672,488 A und der Druckschrift EP 1 050 492 A1 bekannt.

Die Druckschrift US 4,729.469 A zeigt eine Bandsteuerung einer Transportvorrichtung, bei der die Module des Transportbands auf der Seite, die der Auflagefläche für das zu fördernde Gut gegenüberliegt, Führungselemente aufweisen.

Demgegenüber ist der Druckschrift US 7,134,545 B1 eine Transportvorrichtung zu entnehmen, bei der die Antriebselemente des Kettenrads eine Ausformung des Modulkörpers umschließen. Dabei weist die auf dem Modulkörper angeordnete Ausformung eine Ausnehmung auf, die der Bandführung dient.

Die Druckschrift WO 2004/102040 A2 zeigt ein Kettenrad mit einem Antriebselement. Des Weiteren hat das gezeigte Kettenrad Führungselemente, die in der Lücke zwischen zwei benachbarten Antriebselementen angeordnet sind.

Ein Kettenrad ohne Führungselemente ist aus der Druckschrift GB 2 419 172 A bekannt.

Der Erfindung liegt die Aufgabe zugrunde, eine Möglichkeit zu schaffen, dass die Transportvorrichtung eine verbesserte Bandsteuerung aufweist und zugleich größere Vortriebskräfte übertragen werden können.

Diese Aufgabe wird erfindungsgemäß mit einer Transportvorrichtung gemäß den Merkmalen des Anspruchs 1 gelöst. Die weitere Ausgestaltung der Erfindung ist den Unteransprüchen zu entnehmen.

Erfindungsgemäß ist eine Transportvorrichtung vorgesehen, bei der das Führungselement, eine radial zur Rotationsachse des Kettenrads hin gekrümmte Laufkante aufweist. Durch diese konkav gekrümmte Laufkante ist es möglich, die Bandsteuerung zu verbessern und zugleich größere Vortriebskräfte zu übertragen. Durch ein Eingreifen des Führungselements in den Spalt zwischen zwei Ösen benachbarter Module wird ein seitliches Verschieben der Module unterdrückt Das Führungselement weist hierzu zwei Flanken auf. Beim Eingriff des Führungselements in den Spalt zwischen den Ösen liegen die Flanken formschlüssig an den Seitenflächen der Ösen an. Eine Verschiebung des Transportbands relativ zu dem Kettenrad, quer zur Vorschubrichtung, außerhalb des Toleranzraums ist dadurch ausgeschlossen. Die gekrümmte Ausführung des Führungselements erlaubt es nun, dass das Führungselement gegenüber dem Stand der Technik wesentlich tiefer in den Spalt zwischen den Ösen eindringen kann und sich dabei derart um den Gelenkstab herum legt, sodass die Laufkante Vortriebskräfte auf den Gelenkstab überträgt. Dazu ist das Führungselement sichelförmig ausgestaltet. Bei einer besonders vorteilhaften Ausführungsform ist das Antriebselement zugleich als Führungselement ausgebildet. Durch diese Ausgestaltungsform ist es möglich, dass Kettenrad mit einer einfachen Geometrie und geringer Tiefe zu gestalten. Die Vortriebskräfte werden von den Antriebselementen direkt auf den Gelenkstab übertragen und stehen so zugleich an beiden benachbarten Modulen an.

Vorteilhaft ist es, dass der Krümmungsradius der Laufkante gleich oder größer als der Krümmungsradius des Gelenkstabs ist Hierdurch ist es möglich, dass die Laufkante formschlüssig an dem Gelenkstab anlegbar ist. Ist der Krümmungsradius der Laufkante größer als der Krümmungsradius des Gelenkstabs, so ermöglicht dies eine leichtere Aufnahme des Gelenkstabs und eine höhere Toleranz gegenüber Längungen des Transportbands. Längungen des Transportbands können beispielsweise durch Temperaturschwankungen auftreten.

Günstig Ist es, dass alle Führungselemente an dem Kettenrad in einer Spur angeordnet sind. Bei einem anderen Ausführungsbeispiel des Kettenrads sind die Führungselemente in mehreren Spuren angeordnet. Hierdurch ist es möglich, vor allem bei sehr breiten Transportbändern, anstelle einer Vielzahl einzelner Kettenräder ein einziges oder wenige Kettenräder mit mehreren Spuren vorzusehen. Die hieraus resultierende geringere Anzahl an Einzelteilen ist bei der Montage und Wartung vorteilhaft. Darüber hinaus kann durch derartige Kettenräder ein exaktes Zusammenwirken des Kettenrads mit dem Transportband verbessert werden.

Für die Anordnung der Führungselemente sind unterschiedliche Varianten möglich. Beispielsweise kann in jeder zweiten oder dritten Lücke zumindest ein Führungselement vorgesehen sein. Hierdurch können die Reibungsverluste zwischen Kettenrad und Transportband verringert werden. Eine günstige Form ist es, dass in jeder Lücke ein Führungselement angeordnet ist. Hierdurch ist es möglich, dass ein großer Eingriff und somit eine hervorragende Querführung erreicht werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine schematische Darstellung der Transportvorrichtung mit einem Kettenrad und einem Modul eines Transportbands;
- Fig: 2: eine schematische Darstellung eines Moduls;
- Fig.3: eine schematische Darstellung eines Ausschnitts des Transportbands mit zwei benachbarten Modulen;
- Fig. 4: eine Seitenansicht des Kettenrads.

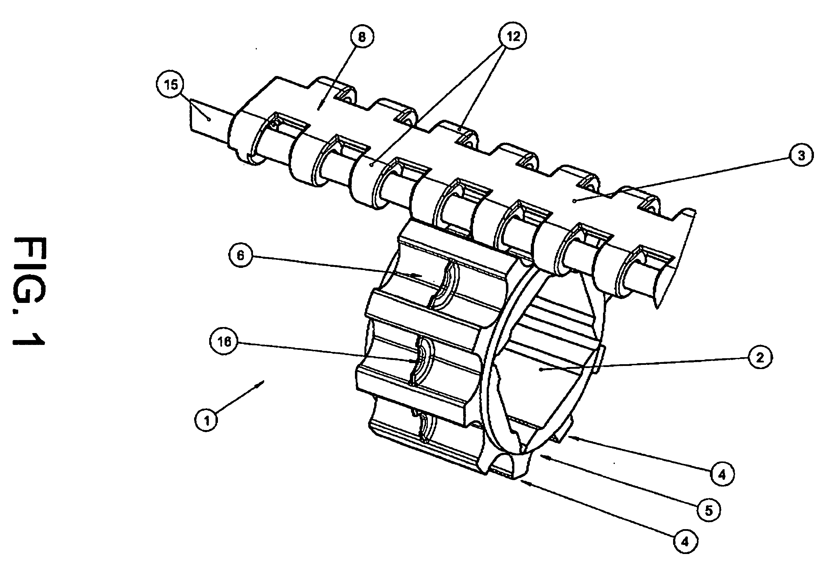

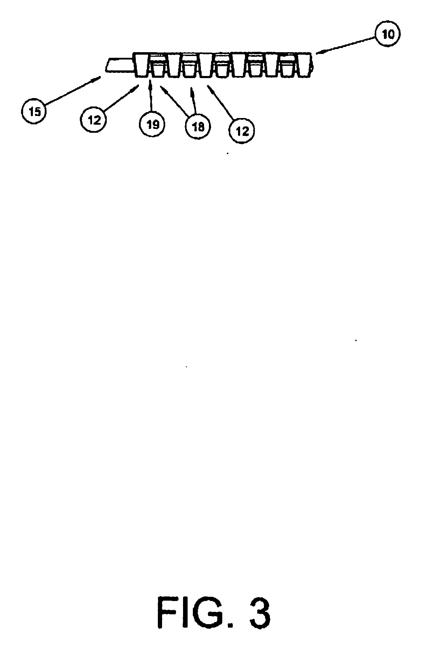

Figur 1 zeigt eine Transportvorrichtung 1 mit einem Kettenrad 2 und einem Modul 3 eines in Figur 3 dargestellten Transportbands 10. Dieses besteht aus einzelnen, relativ zueinander beweglichen Modulen 3, von denen hier eines dargestellt ist. Dieses Modul 3 hat eine Seite 8 zur Aufnahme des zu befördernden Guts und Ösen 12 zur Aufnahme eines zwei benachbarte Module 3 verbindenden Gelenkstabs 15. Das Kettenrad 2 umfasst ein Antriebselement 4 und ein in einer Lücke 5 zwischen zwei benachbarten Antriebselementen 4 angeordnetes Führungselement 6. Das Führungselement 6 hat eine zur Rotationsachse des Kettenrads 2 hin gekrümmte Laufkante 16. Alle Führungselemente 6 sind in einer Spur angeordnet

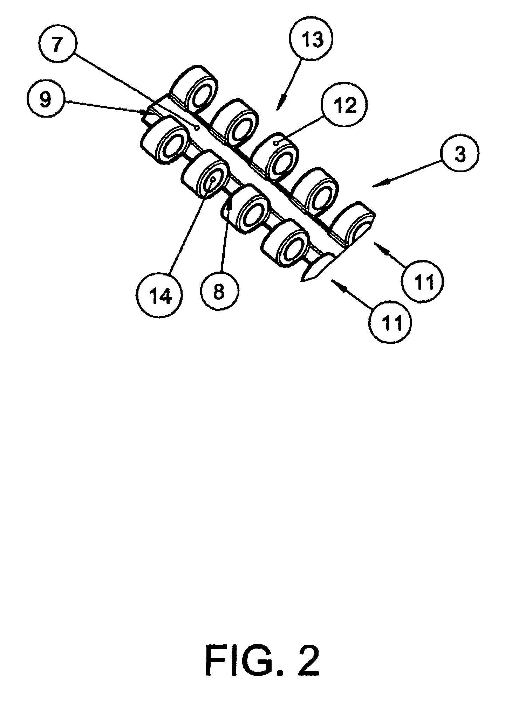

Figur 2 zeigt ein Modul 3 mit einem plattenartigen Modulkörper 7, dessen eine Seite 8 die Auflagefläche für das zu fördernde Gut bildet. An der anderen Seite 9 des Moduls 3 beziehungsweise an den Ösen 12 liegen die Antriebselemente 4 des Kettenrads 2 an und übertragen so die Antriebs- oder Vorschubkraft auf das in Figur 3 gezeigte Transportband 10. Das Modul 3 hat weiterhin Endabschnitte 11, die den Modulkörper 7 in und gegen die Vortriebsrichtung des in Figur 3 gezeigten Transportbänds 10 abschließen. An den Endabschnitten 11 sind beabstandete Ösen 12 ausgebildet Zwischen den Ösen 12 eines Moduls 3 sind Zwischenräume 13 ausgebildet, die zum Eingriff mit Ösen eines benachbarten Moduls 3 vorgesehen sind. Die Ösen 12 haben eine Durchbrechung 14. Die Ösen 12 zweier benachbarter Module 3 können mittels eines in Figur 1 dargestellten Gelenkstabs 15 verbunden werden. Der in Figur 1 dargestellte Gelenkstab 15 wird dazu in der Durchbrechung 14 der Ösen 12 angeordnet

Figur 3 zeigt einen Ausschnitt eines Transportbands 10 mit zwei benachbarten Modulen. Die Ösen 18 des einen Moduls sind in dem Zwischenraum zwischen den Ösen 12 des anderen Moduls positioniert. In der in Figur 2 gezeigten Durchbrechung 14 der Ösen 12, 18 ist der Gelenkstab 15 angeordnet. Zwischen zwei benachbarten Ösen 12, 18 ist ein Spalt 19 ausgebildet. Laufen die Module über ein Kettenrad, greift das Führungselement des Kettenrads formschlüssig in den Spalt ein und nimmt Querkräfte aus dem Transportband auf.

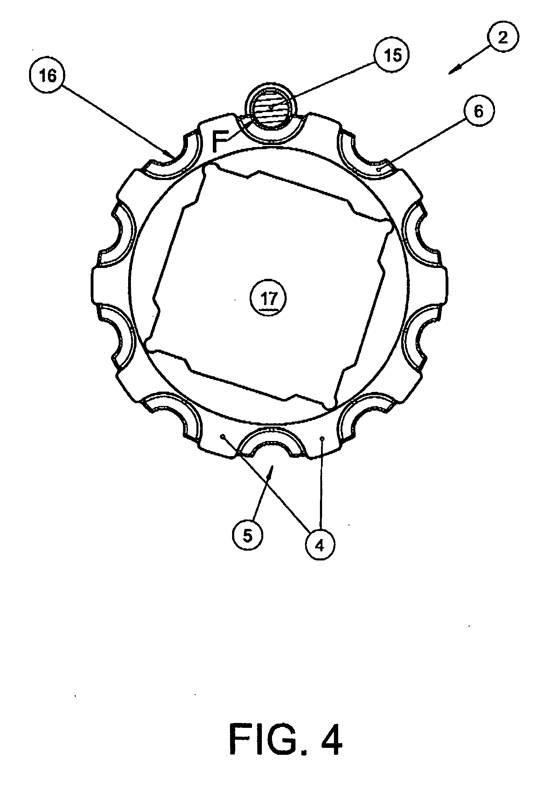

Figur 4 zeigt das Kettenrad 2 in einer Seitenansicht und exemplarisch einen Gelenkstab 15. Das in der Lücke 5 zwischen zwei benachbarten Antriebselementen 4 angeordnete Führungselement 6 hat eine gekrümmte, sichelförmige Laufkante 16. Der Krümmungsradius der Laufkante 16 ist gleich oder größer als der Krümmungsradius des Gelenkstabs 15. Hierdurch wird der Gelenkstab 15 von dem Führungselement 6 partiell umschlossen. Durch diesen Formschluss wird der Gelenkstab 15 zur Übertragung von Antriebs- bzw. Vortriebskraft, dargestellt durch den Pfeil F, auf das Transportband genutzt. Die Durchbrechung 17 in der Mitte des Kettenrades dient der Aufnahme einer Antriebsachse.

## Patentansprüche

1. Transportvorrichtung (1)
bestehend aus einem aus einzelnen, relativ zueinander beweglichen Modulen (3) bestehenden Transportband (10) mit einem plattenartigen Modulkörper (7), dessen eine Seite (8) die Auflagefläche für das zu fördernde Gut bildet und an dessen Endabschnitten (11) beabstandete Ösen (12, 18) ausgebildet sind, wobei jeweils die Ösen (12) eines Moduls (3) in Zwischenräume (13) der Ösen (18) eines benachbarten Moduls (3) eingreifen und die Ösen (12) zweier benachbarter Module (3) mittels eines in einer Durchbrechung (14) der Ösen (12) angeordneten Gelenkstabs (15) verbunden sind,
und weiterhin
bestehend aus einem Kettenrad (2) umfassend mehrere, insbesondere gleichmäßig über den Umfang des Kettenrads (2) verteilte Antriebselemente (4) zur Übertragung der Vortriebskraft auf das Transpartband (10), und Führungselemente (6) zur Aufnahme von Querkräften des Transportbands (10),
**dadurch gekennzeichnet, dass**
die Führungselemente (6) eine radial zur Rotationsachse des Kettenrads (2) hin gekrümmte Laufkante (16) aufweisen, welche zur Übertragung von Vorschubkräften an dem Getenkstab (15) anlegbar ist.

2. Transportvorrichtung (1) nach Anspruch 1, **dadurch gekennzeichnet, dass** ein Krümmungsradius der Laufkante (16) gleich oder größer als der Krümmungsradius des Gelenkstabs (15) ist

3. Transportvorrichtung (1) nach zumindest einem der vorhergehenden Ansprüche, **dadurch gekennzeichnet, dass** das Führungselement (6) zum Eingriff in einen Spalt zwischen den Ösen (12) zweier benachbarter Module (3) ausgebildet ist.

4. Transportvorrichtung (1) nach zumindest einem der vorhergehenden Ansprüche, **dadurch gekennzeichnet, dass** das Antriebselement (4) als Führungselement (6) und zum Eingriff in einen Spalt zwischen den Ösen (12) zweier benachbarter Module (3) ausgebildet ist.

5. Transportvorrichtung (1) nach zumindest einem der vorhergehenden Ansprüche 1 bis 4, **dadurch gekennzeichnet, dass** die Führungselemente (6) an dem Kettenrad (2) jeweils in einer Lücke (5) zwischen zwei benachbarten Antriebselementen (4) angeordnet sind.

6. Transportvorrichtung (1) nach zumindest einem der vorhergehenden Ansprüche, **dadurch gekennzeichnet, dass** das Antriebselement (4) zur Übertragung der Vortriebskraft mit einer anderen Seite (9) des Moduls (3), insbesondere in einem Bereich zwischen den Endabschnitten (11), formschlüssig verbunden ist.

7. Transportvorrichtung (1) nach zumindest einem der vorhergehenden Ansprüche, **dadurch gekennzeichnet, dass** alle Führungselemente (6) an dem Kettenrad (2) in einer Spur angeordnet sind.

8. Transportvorrichtung (1) nach zumindest einem der vorhergehenden Ansprüche, **dadurch** gekenntzeichnet, dass die Führungselemente (6) an dem Kettenrad (2) in mehreren Spuren angeordnet sind.

9. Transportvorrichtung (1) nach zumindest einem der vorhergehenden Ansprüche, **dadurch gekennzeichnet, dass** in jeder Lücke (5), in jeder zweiten oder in jeder dritten Lücke (5) zumindest ein Führungselement (6) angeordnet ist.

10. Transportvorrichtung (1) nach zumindest einem der vorhergehenden Ansprüche, **dadurch gekennzeichnet, dass** das Kettenrad (2) und/oder die Module (3) insbesondere vollständig und/oder einteilig aus einem Kunststoff hergestellt sind.

## Claims

1. Transporting device (1)
consisting of a transporting belt (10) which consists of individual modules (3) that are movable in relation to one another, said transporting belt (10) having a plate-like module body (7), one side (8) of which forms the resting surface for the material to be conveyed and at the end sections (11) of which spaced-apart eyelets (12, 18) are formed, wherein in each case the eyelets (12) of one module (3) engage into intermediate spaces (13) between the eyelets (18) of an adjacent module (3) and the eyelets (12) of two adjacent modules (3) are connected by means of an articulation rod (15) arranged in a through-hole (14) in the eyelets (12),
and also
consisting of a sprocket (2) comprising a plurality of drive elements (4), which are distributed in particular in a uniform manner around the circumference of the sprocket (2), for transmitting the forward drive force to the transporting belt (10), and guide elements (6) for absorbing transverse forces from the transporting belt (10),
**characterized in that**
the guide elements (6) have a contact edge (16) which is curved radially in the direction of the rotational axis of the sprocket (2) and can be brought into contact with the articulated rod (15) in order to transmit forward drive forces.

2. Transporting device (1) according to Claim 1, **characterized in that** a radius of curvature of the contact edge (16) is the same as or larger than the radius of curvature of the articulated rod (15).

3. Transporting device (1) according to at least one of the preceding claims, **characterized in that** the guide element (6) is designed to engage in a gap between the eyelets (12) of two adjacent modules (3).

4. Transporting device (1) according to at least one of the preceding claims, **characterized in that** the drive element (4) is designed as a guide element (6) and to engage in a gap between the eyelets (12) of two adjacent modules (3).

5. Transporting device (1) according to at least one of the preceding claims 1 to 4, **characterized in that** the guide elements (6) on the sprocket (2) are arranged in each case in a space (5) between two adjacent drive elements (4).

6. Transporting device (1) according to at least one of the preceding claims, **characterized in that**, in order to transmit the forward drive force, the drive element (4) is connected in a form-fitting manner to another side (9) of the module (3), in particular in a region between the end sections (11).

7. Transporting device (1) according to at least one of the preceding claims, **characterized in that** all of the guide elements (6) are arranged on the sprocket (2) in a groove.

8. Transporting device (1) according to at least one of the preceding claims, **characterized in that** the guide elements (6) are arranged on the sprocket (2) in a plurality of grooves.

9. Transporting device (1) according to at least one of the preceding claims, **characterized in that** at least one guide element (6) is arranged in every space (5), in every second space (5) or in every third space (5).

10. Transporting device (1) according to at least one of the preceding claims, **characterized in that** the sprocket (2) and/or the modules (3) are produced in particular entirely and/or integrally from a plastics material.

## Revendications

1. Dispositif de transport (1),
constitué d'une bande transporteuse (10) constituée de modules individuels (3) déplaçables les uns par rapport aux autres, avec un corps de module (7) de type plaque, dont un côté (8) forme la surface d'appui pour le produit à transporter et au niveau des portions d'extrémité (11) duquel sont réalisés des oeillets espacés (12, 18), les oeillets respectifs (12) d'un module (3) s'engageant dans des espaces intermédiaires (13) entre les oeillets (18) d'un module adjacent (3), et les oeillets (12) de deux modules adjacents (3) étant connectés au moyen d'une barre articulée (15) disposée dans une interruption (14) des oeillets (12), et en outre
constitué d'une roue dentée (2) comprenant plusieurs éléments d'entraînement (4) répartis notamment uniformément sur la périphérie de la roue dentée (2), pour le transfert de la force de propulsion à la bande transporteuse (10), et des éléments de guidage (6) pour recevoir les forces transversales de la bande transporteuse (10), **caractérisé en ce que**
les éléments de guidage (6) présentent une arête de roulement (16) courbée radialement vers l'axe de rotation de la roue dentée (2), qui peut être appliquée contre la barre articulée (15) pour transférer les forces de poussée.

2. Dispositif de transport (1) selon la revendication 1, **caractérisé en ce qu'**un rayon de courbure de l'arête de roulement (16) est supérieur ou égal au rayon de courbure de la barre articulée (15).

3. Dispositif de transport (1) selon au moins l'une quelconque des revendications précédentes, **caractérisé en ce que** l'élément de guidage (6) est réalisé de manière à venir en prise dans une fente entre les oeillets (12) de deux modules adjacents (3).

4. Dispositif de transport (1) selon au moins l'une quelconque des revendications précédentes, **caractérisé en ce que** l'élément d'entraînement (4) est réalisé sous forme d'élément de guidage (6) et de manière à venir en prise dans une fente entre les oeillets (12) de deux modules adjacents (3).

5. Dispositif de transport (1) selon au moins l'une quelconque des revendications précédentes 1 à 4, **caractérisé en ce que** les éléments de guidage (6) sur la roue dentée (2) sont à chaque fois disposés dans un vide (5) entre deux éléments d'entraînement adjacents (4).

6. Dispositif de transport (1) selon au moins l'une quelconque des revendications précédentes, **caractérisé en ce que** l'élément d'entraînement (4) pour le transfert de la force de propulsion est connecté par engagement par correspondance géométrique avec un autre côté (9) du module (3), notamment dans une région entre les portions d'extrémité (11).

7. Dispositif de transport (1) selon au moins l'une quelconque des revendications précédentes, **caractérisé en ce que** tous les éléments de guidage (6) sont disposés sur la roue dentée (2) dans une trace.

8. Dispositif de transport (1) selon au moins l'une quelconque des revendications précédentes, **caractérisé en ce que** les éléments de guidage (6) sur la roue dentée (2) sont disposés dans plusieurs traces.

9. Dispositif de transport (1) selon au moins l'une quelconque des revendications précédentes, **caractérisé en ce que** dans chaque vide (5), dans un vide (5) sur deux ou dans un vide (5) sur trois est disposé au moins un élément de guidage (6).

10. Dispositif de transport (1) selon au moins l'une quelconque des revendications précédentes, **caractérisé en ce que** la roue dentée (2) et /ou les modules (3) sont notamment réalisés complètement et/ou d'une seule pièce en plastique.
